# EUROPEAN PATENT APPLICATION

(11) **EP 3 163 260 A1**
(43) Date of publication of application: **03.05.2017**
(21) Application number: 15811695.4
(22) Date of filing: 23.06.2015
(51) Int. Cl.: G01D 21/00, G01D 5/00

(54) **SENSOR MODULE CAPABLE OF SETTING OPERATION STANDARD THROUGH PHYSICAL VALUE INPUT AND METHOD FOR CONTROLLING SENSOR MODULE**

(30) Priority: 25.06.2014 KR 20140078235
(71) Applicant: Kim, Jong Tae, Gwacheon-si, Gyeonggi-do 427-739 (KR)
(72) Inventor: Kim, Jong Tae, Gwacheon-si, Gyeonggi-do 427-739 (KR)
(74) Representative: Stolmár & Partner Patentanwälte PartG mbB
(86) International application number: PCT/KR2015/006334
(87) International publication number: WO 2015/199401

(57) **Abstract**

The present invention relates to a sensor module capable of setting an operation reference through input of a physical value and a control method of the sensor module, and according to the present invention, since even a general user without having a professional programming knowledge or a hardware handling skill may easily set an operation reference by inputting an actual physical value at user's own will, the operation reference can be accurately set in all apparatuses using a sensor according to installation environments or preference of the user.

## Description

### TECHNICAL FIELD

The present invention relates to a sensor module, and more specifically, to a technique of setting an operation reference information only through simple handling without a professional programming knowledge or a hardware handling skill.

### BACKGROUND ART

A sensor is an apparatus for measuring various kinds of physical states or ambient environmental factors such as a temperature, a distance, a sound pressure, a light amount and the like and outputting the measured states or factors as an electrical signal. Although such a sensor is used for measuring the physical states themselves, it is general that the sensor is used in association with other apparatuses or systems to accomplish a specific operation according to a measured value.

For example, it is used to operate an air conditioning system by measuring an indoor temperature through a temperature sensor, to generate a warning sound when a vehicle moves backward after sensing an object through a distance measuring sensor or to operate a lighting system after measuring brightness through an illumination sensor.

All apparatuses performing a specific operation using a sensor like this compares a value measured by the sensor with a previously set reference value to generate an operation following thereafter. That is, it is setting a reference temperature to twenty-six degrees and operating a cooler when the indoor temperature measured through a temperature sensor exceeds twenty-six degrees or generating a warning sound from a vehicle if it is confirmed through a distance measuring sensor that an object is approached within 1m.

However, reference information to be compared with the value measured by a sensor is generally fixed to a value set previously when a product is released. Accordingly, since a professional knowledge such as changing a program itself or adjusting a variable resistor should be used to change an operation reference, it is difficult for general users to re-set the operation reference.

Although a setting button may be separately provided so that a user may change the operation reference at will, there is a problem in that the user should perform a work of setting the operation reference on the basis of estimation without recognizing himself or herself a state of the operation reference that the user actually desires and, moreover, it is difficult to accurately set the operation reference value since a minute adjustment is not allowed.

Prior art of the technique for re-setting the operation reference include Korean Laid-opened Patent No. 10-2002-0022959 and the like.

### DISCLOSURE OF INVENTION

### TECHNICAL PROBLEM

Therefore, the present invention has been made in view of the above problems, and it is an object of the present invention to provide a sensor module for setting an operation reference information by inputting a physical value so that even a general user without having a professional knowledge may easily and accurately change an operation reference of an apparatus or a system by reflecting the user's own will.

### TECHNICAL SOLUTION

To accomplish the above object, according to one aspect of the present invention, there is provided a sensor module including: a sensor unit for measuring a physical value; a reference input switch for receiving a command of a user; a memory for storing reference information; and a control unit for comparing the physical value measured by the sensor unit with the reference information stored in the memory and outputting a control signal, in which if the reference input switch is activated, the control unit updates the reference information by storing the physical value measured by the sensor unit in the memory.

Here, the sensor unit may include one or more of a distance measuring sensor, an illumination sensor, a pressure sensor, a loudness sensor, a temperature sensor, a humidity sensor, a gas sensing sensor, a tilt sensor, a speed sensor and an acceleration sensor.

According to another aspect of the present invention, there is provided a control method of a sensor module, the method including the steps of: confirming whether or not a reference input switch is activated, by a control unit; comparing, if it is confirmed that the reference input switch is inactive, a physical value measured by a sensor unit with reference information previously stored in memory and outputting a control signal, by the control unit; and updating, if it is confirmed that the reference input switch is active, the reference information by storing the physical value measured by the sensor unit in the memory.

### ADVANTAGEOUS EFFECTS

According to the present invention, since even a general user without having a professional programming knowledge or a hardware handling skill may easily set an operation reference by inputting an actual physical value at user's own will, the operation reference can be accurately set in all apparatuses using a sensor according to installation environments or preference of the user.

### BRIEF DESCRIPTION OF THE DRAWINGS

FIG. 1 is a block diagram showing a sensor module according to an embodiment of the present invention.
FIG. 2 is a circuit diagram showing a sensor module to which a distance measuring sensor is applied as an example of the sensor module shown in FIG. 1.
FIG. 3 is a flowchart illustrating a control method of a sensor module according to an embodiment of the present invention.

### DESCRIPTION OF SYMBOLS

- 1:: Sensor module
- 11:: Sensor unit
- 12:: Reference input switch
- 13:: Operation setting switch
- 14:: Control unit
- 15:: AD conversion unit
- 16:: Microcomputer
- 17:: Connector
- 18:: Memory

### BEST MODE FOR CARRYING OUT THE INVENTION

The preferred embodiments of the present invention will be hereafter described with reference to the accompanying drawings. Furthermore, although some configurations unrelated to the spirit of the present invention will be omitted or compressed, the omitted configurations are not necessarily needless in the present invention and may be combined and used by those skilled in the art.

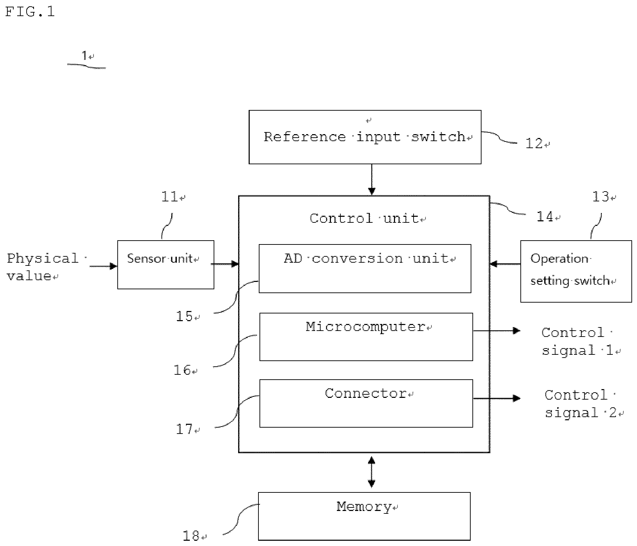

FIG. 1 is a block diagram showing a sensor module according to an embodiment of the present invention. As shown in FIG. 1, a sensor module 1 according to an embodiment of the present invention includes a sensor unit 11, a reference input switch 12, an operation setting switch 13, a control unit 14 and a memory 18.

The sensor unit 11 is a configuration for measuring a physical value, converting the measured physical value into an electrical signal (voltage) and outputting the electrical signal. Such a sensor unit 11 may include various sensors according to the purpose of using an apparatus or a system to which the sensor module 11 according to the embodiment is applied. For example, the sensor unit 11 may include any one of a distance measuring sensor, an illumination sensor, a pressure sensor, a loudness sensor, a temperature sensor, a humidity sensor, a gas sensing sensor, a tilt sensor, a speed sensor and an acceleration sensor or two or more of these sensors.

The reference input switch 12 is a switch for inputting a command for a user to re-set an operation reference, i.e., reference information.

The operation setting switch 13 is prepared to receive the command of the user so that the user himself or herself may select a method for outputting a control signal on the basis of the reference information already set before. For example, if the reference information is a specific value, it may be selected to output a control signal for performing an operation when a value measured thereafter is larger or smaller than the reference information. In addition, if the reference information is a specific range of values, it may be selected to output a control signal for performing an operation when a value measured thereafter is within or out of the range.

The control unit 14 stores the input value measured by the sensor unit 11 into the memory 18 as reference information while the reference input switch 12 is in an active state and controls to compare the measurement value measured by the sensor unit 11 with the reference information and output a control signal according to the setting of the operation setting switch 13 while the reference input switch 12 is in an inactive state. Such a control unit 14 includes an AD conversion unit 15, a microcomputer 16 and a connector 17.

The AD conversion unit 15 is prepared to convert a voltage into a digital value and the voltage is output in correspondence to a physical value which the sensor unit 11 measures.

The microcomputer 16 confirms an activated state of the reference input switch 12 and a setting state of the operation setting switch 13, stores the information measured through the sensor unit 11 and converted into a digital value by the AD conversion unit 15 into the memory 18 as reference information if the reference input switch 12 is in an active state, and compares the measurement information measured through the sensor unit 11 and converted into a digital value by the AD conversion unit 15 with the reference information stored in the memory 18 and outputs a control signal according to the setting state of the operation setting switch 13 if the reference input switch 12 is in an inactive state.

The connector 17 is a configuration for connecting the sensor module to another apparatus.

The memory 18 is prepared to store the reference information under the control of the microcomputer 16. If the step of setting the reference information through activation of the reference input switch 12 is omitted, the reference information initially set when the product is released is maintained in the memory 18.

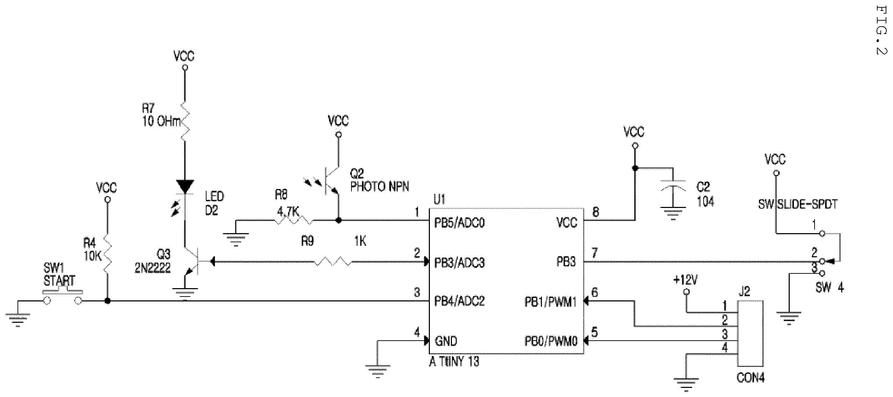

FIG. 2 is a circuit diagram showing a sensor module 1 to which a distance measuring sensor is applied as an example of the sensor module 1 shown in FIG. 1. That is, in the sensor module 1 of FIG. 2, the sensor unit 11 is configured of a light transmitting unit D2 and a light receiving unit Q2. That is, when a light (infrared ray) generated by D2 is reflected by an object and enters into the light receiving unit Q2, a predetermined voltage is output according to the amount of the received light, and the light is input into the control unit 14 of U1 and stored in the memory 18 after being converted into a digital value or used as a reference information for comparison for outputting a control signal.

Meanwhile, SW1 is the reference input switch 12, SW4 is the operation setting switch 13, and J2 is the connector 17. If the connector 17 is used, various connection methods such as synchronous communication using two wires, Low/High according to GPIO, UART and the like can be implemented.

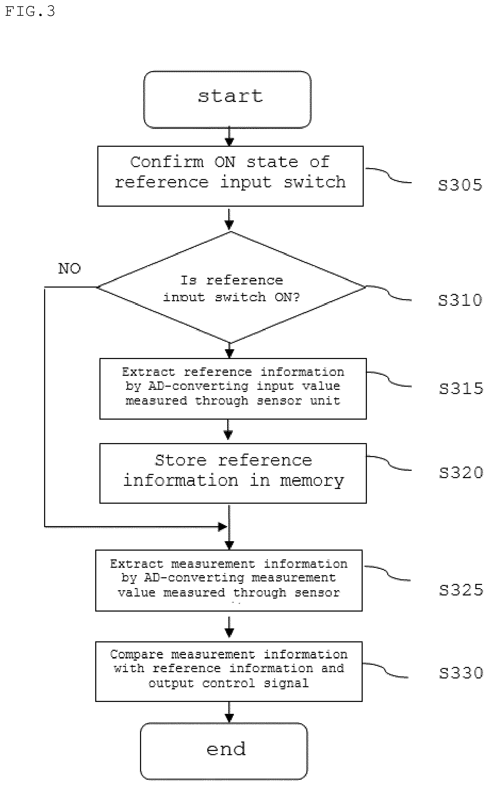

Functional characteristics of the sensor module 1 shown in FIGS. 1 and 2 will be further specified through a control method of the sensor module described below through FIG. 3.

FIG. 3 is a flowchart illustrating a control method of a sensor module according to an embodiment of the present invention. Before describing the control method of the sensor module, some terminologies used below will be defined first.

A 'physical value' is information on an actual physical state input through the sensor unit 11. For example, it is a value such as a light amount, a pressure, a sound volume, a temperature, a humidity, a gas concentration, a slope, a speed, an acceleration or the like.

An 'input value' and a 'measurement value' are predetermined voltage values that are a electrical signal of measured physical value by the sensor. Although the values are the same in that they are voltage values measured and provided by the sensor unit 11, the 'input value' is a value measured through the sensor unit 11 while the reference input switch 12 is in an active state, and the 'measurement value' is a value measured through the sensor unit 11 while the reference input switch 12 is in an inactive state.

The 'reference information' is a information about a input value converted into a digital value through the AD conversion unit 15 and stored in the memory 18.

The 'measurement information' is information about a measured value acquired by converting the measurement value into a digital value through the AD conversion unit 15. Although such measurement information may be stored in the memory 18 or a separate storage device for creation of a record or monitoring purpose, it is regarded in this embodiment as temporary information generated in real time and discarded after being compared with the reference information.

The 'control signal' is a output signal generated by microcomputer 16 according to a setting state of the operation setting switch 13 after the measurement information is compared with the reference information. Such a control signal may be transmitted from the microcomputer 16 itself to drive a specific apparatus or system or to drive other apparatuses or systems through the connector 17.

Referring to the sensor module 1 shown in FIG. 1 to describe the control method of the sensor module 1 according to an embodiment of the present invention shown in FIG. 3, the microcomputer 16 of the control unit 14 confirms if the reference input switch 12 is in an active state (step S305). If the reference input switch 12 is in an inactive state (step S310), the microcomputer 16 extract the measured value measured through the sensor unit 11 and converted into a digital value by the AD conversion unit 15 (step S325). Here, the sensor unit 11 measures a physical value in real-time or at previously set time intervals and outputs the measurement value. Then, the microcomputer 16 compares the measurement information converted into a digital value by the AD conversion unit 15 with the reference information stored in the memory 18 and outputs a control signal for generating a specific operation according to a setting state of the operation setting switch 13 (step S330).

Here, the reference information stored in the memory 18 is information which is updated at any time by a user, and if the user does not perform a work of updating the reference information at all by activating the reference input switch 12 while using the sensor module 1, the reference information stored in the memory 18 may be the information initially set when the product is released and maintained continuously.

Contrarily, if it is confirmed that the reference input switch 12 is in an active state (step S310), reference information is extracted from the input value measured by the sensor unit 11 is converted into a digital value by the AD converter 15 (step S315), and the microcomputer 16 stores the reference information in the memory 18 (step S320). At this point, the existing reference information stored in the memory is deleted and updated with new reference information. In addition, although the process of measuring a physical value by the sensor unit 11 is set to measure the value at predetermined time intervals, if the reference input switch 12 is activated, a work of immediately measuring the physical value is performed regardless of the set time intervals.

The reference input switch 12 is activated (step S305) and the input value measured by the sensor unit 11 is converted into a digital value by the AD conversion unit 15 (step S315) and storing the reference information in the memory 18 (step S320) is completed, the sensor module 1 returns to a normal measurement process. That is, a physical value is measured through the sensor unit 11 in real-time or at regular time intervals and the reference information is extracted as the measured value is AD-converted by the AD conversion unit 15 (step S325), the microcomputer 16 compares the measurement information with the reference information stored in the memory 18 and outputs a control signal for generating a specific operation according to a setting state of the operation setting switch (step S330).

Seeing various examples of apparatuses or systems applied with the sensor module 1, the process shown in FIG. 3 will be further clarified.

If the sensor module 1 shown in FIG. 1 is applied for the purpose of determining whether an object is placed nearby when a vehicle moves backward and generating a warning sound, the sensor unit 11 of the sensor module 1 will include a distance measuring sensor. That is, if reference information of 1m (of course, a digital value corresponding to 1m) initially set when the vehicle released is stored in the memory 18 of the sensor module 1 and the transmission gear of the vehicle is placed at the reverse position, the sensor unit 11 (the distance measuring sensor) measures a distance to the object sensed from the rear in real-time, and then if the microcomputer 16 confirms that the measured distance to the object is less than 1m of the reference information stored in the memory 18, the microcomputer 16 outputs a control signal for outputting a warning sound. This control signal is transferred to a separate warning sound generation device, and a warning sound is generated. Here, it may be implemented to generate the warning sound in multiple levels according to the distance to the object. That is, if the distance to the object is between 30cm and 1m, the control signal is output to generate a first warning sound, and if the distance is less than 30cm, the control signal is output to generate a second warning sound.

However, if the owner of the vehicle is good at driving, the driver will not care much about an object placed at a distance of 1m, and an unintentionally blaring warning sound may be annoying. Accordingly, in this case, the driver may feel that it needs to change the operation reference (reference information). If a conventional sensor module is applied to the vehicle, the owner of the vehicle should visit a service center to re-set the operation reference (reference information). However, if the sensor module 1 according to an embodiment of the present invention is applied to a vehicle, the driver may easily re-set the operation reference (reference information) by placing an object at a distance for generating a warning sound while pressing (activating) the reference input switch 12 installed in the vehicle. For example, the operation reference is set to generate a first warning sound when an object is within 50cm and generate a second warning sound when an object is within 20cm.

As another example, if the sensor module 1 shown in FIG. 1 is applied for the purpose of automatically turning on a lamp of a vehicle when the surroundings are getting dark, the sensor unit 11 of the sensor module 1 may include an illumination sensor. That is, if reference information of 500 Lux (a digital value corresponding to 500 Lux) is stored in the memory 18 of the sensor module 1 when the vehicle is released and a value measured by the sensor unit 11 (the illumination sensor) while driving is less than 500 Lux, a control signal is output from the microcomputer 16 to automatically turn on the lamp. However, the user may feel that turning on the lamp at 500 Lux is turning on the light although it is still too bright.

In this case, as darkness gradually falls down while actually driving a vehicle, if the user activates the reference input switch 12 at the moment that the user thinks a lamp need to be turned on, an input value of the sensor unit 11 measured at that time point is re-set as reference information and stored in the memory 18. For example, reference information of 350 Lux may be stored in the memory 18. Since the lamp is automatically turned on thereafter at less than 350 Lux while driving, this may enhance satisfaction of the user.

At this point, the user does not need to know a desired intensity of illumination (if it is 350 Lux) to re-set the reference information. That is, if the driver himself or herself feels it is as dark as to operate a lamp, the driver only needs to input a physical value of a surrounding environment. The user does not need to know the specific value of the intensity of illumination at that time. Accordingly, this may further correctly reflect the user's will than setting the reference information through a separate control switch.

As still another example, if the sensor module 1 shown in FIG. 1 is applied to an air conditioning system which starts heating or cooling after measuring an indoor temperature, the sensor unit 11 of the sensor module 1 may include a temperature sensor. That is, the sensor module 1 operates a heater if the indoor temperature is lower than a predetermined temperature and operates a cooler if the indoor temperature is higher than a predetermined temperature. Even in this case, specific temperatures are stored in the memory 18 as reference information to determine a time point of operating the heater or the cooler. Although most of air conditioning systems allows a user to set a desired temperature through a separate control unit, it is only that the user arbitrarily sets a desired temperature, and the user controls the heater or the cooler without knowing the exact temperature of actually feeling cold or hot.

Accordingly, if a sensor module 1 according to the embodiment is applied to an air conditioning system, a user may store a relevant indoor temperature, e.g., 25.4 degrees, in the memory 18 as reference information by pressing the reference input switch 12 provided in a separate control unit at that time feeling hot in summer (the user does not need to know the temperature at that time). Then, the air conditioning system operates a cooling system if the indoor temperature rises higher than 25.4 degrees and stops operation of the cooling system if the indoor temperature drops below 25.4 degrees. That is, since it is not that the user arbitrarily sets a specific temperature without knowing whether or not it is a temperature of feeling hot, but that the user stores an indoor temperature at that time actually feeling hot as reference information, the air conditioning system may operate more efficiently. Moreover, although a conventional air conditioning system may set the temperature by the unit of one degree, it cannot set a precise temperature such as 25.4 degrees.

Although sensor units 11 applied with a distance measuring sensor, an illumination sensor and a temperature sensor are described above for illustrative purposes, the sensor unit 11 may be sufficiently applied in an apparatus or a system provided with a pressure sensor, a loudness sensor, a humidity sensor, a gas sensing sensor, a tilt sensor, a speed sensor and an acceleration sensor according to embodiments. In addition, according to the setting of the operation setting switch 12 of the sensor module 1, it may be selected to output a control signal of a specific operation when the measurement information measured by the sensor unit 11 and converted into a digital value is smaller than the reference information or to output a control signal of a specific operation when the measurement information is larger than the reference information.

In addition, the reference information stored as a digital value does not necessarily need to be stored as a specific value.

For example, if the reference input switch 12 is activated only for an extremely short time (e.g., 0.2 seconds), the reference information may be stored as a specific value since change of a physical state is not great during the short time period. That is, a temperature of 25.4 degrees is stored as reference information.

Contrarily, if the reference input switch 12 is activated long enough for a predetermined time (e.g., 2 seconds or more), the operation reference may be set in a variety of ways according to embodiments since there may be a significant change of a physical state during the time.

For example, an input value at a moment among a starting value and an ending value of a time during which the reference input switch 12 is activated may be set as reference information, or both the starting value and the ending value may be set as reference information. That is, if the starting value of a distance measuring sensor is 70cm and its ending value is 20cm, both the starting value and the ending value are stored and used as a reference for a first warming sound and a second warning sound.

Otherwise, any one of a minimum value and a maximum value measured while the reference input switch 12 is activated may be set as reference information, or both the minimum value and the maximum value may be set as reference information. That is, in the temperature sensor, the minimum value is used as a reference value for heating operation, and the maximum value is used as a reference value for cooling operation.

As still another example, it is also possible that a minimum value and a maximum value of an input value measured while the reference input switch 12 is activated may be set as an operation reference range, and thereafter, a control signal is generated and transmitted if a measurement value measured by the sensor unit 11 is within the operation reference range set as reference information, and the control signal is not generated if the measurement value is out of the operation reference range. Of course, according to another embodiments, it may be designed to generate a control signal if the measurement value is out of the operation reference range set as reference information. And the control signal is not generated if the measurement value is within the operation reference range.

In addition, an arithmetic mean value or a median value of the minimum value and the maximum value measured while the reference input switch 12 is activated may be set as reference information.

In addition, an initial measurement value of activating the reference input switch 12 may be discarded, and a final input value or a mean of input values provided for some time near at endpoint may be set as reference information. For example, when an output volume of an audio system is set to be the same as the loudness of an input sound by directly inputting a sound through a loudness sensor, the loudness of the input sound may be unclear in an early stage and becomes a desired loudness in a later stage, and in this case, the loudness of the sound of the later stage is used.

In addition, a value maintained for the longest time among the values measured while the reference input switch 12 is activated may be determined as user's own will, and the value maintained for the longest time may be set as reference information.

In addition, a pattern of values measured while the reference input switch 12 is activated may be set as reference information. For example, if a pattern of the measured values by the sensor matches a specific pattern of the reference information, this is recognized as occurrence of an impact and a control signal for a subsequence action is generated.

According to the present invention as described above in detail, since even a general user without having a professional programming knowledge or a hardware handling skill may easily set an operation reference by inputting an actual physical value at user's own will, the operation reference can be set accurately in all apparatuses using a sensor according to installation environments or preference of the user.

Although the preferred embodiments of the present invention have been disclosed for illustrative purposes, those skilled in the art may make various changes, modifications and additions within the spirit and scope of the present invention, and the changes, modifications and additions may be regarded as falling within the scope of the claims of the present invention.

## Claims

1. A sensor module comprising:
a sensor unit for measuring a physical value;
a reference input switch for receiving a command of a user;
a memory for storing reference information; and
a control unit for comparing the physical value measured by the sensor unit with the reference information stored in the memory and generating a control signal, wherein
if the reference input switch is activated, the control unit updates the reference information by storing the physical value measured by the sensor unit in the memory.

2. The sensor module according to claim 1, wherein the sensor unit includes one or more of a distance measuring sensor, an illumination sensor, a pressure sensor, a loudness sensor, a temperature sensor, a humidity sensor, a gas sensing sensor, a tilt sensor, a speed sensor and an acceleration sensor.

3. A control method of a sensor module, the method comprising the steps of:
confirming whether or not a reference input switch is activated, by a control unit;
comparing, if it is confirmed that the reference input switch is inactive, a physical value measured by a sensor unit with reference information previously stored in memory and generating a control signal, by the control unit; and
updating, if it is confirmed that the reference input switch is active, the reference information by storing the physical value measured by the sensor unit in the memory.
